# EUROPÄISCHE PATENTSCHRIFT

(11) **EP 3 874 532 B1**
(45) Veröffentlichungstag und Bekanntmachung des Hinweises auf die Patenterteilung: **09.08.2023**
(21) Anmeldenummer: 19821024.7
(22) Anmeldetag: 28.11.2019
(51) Int. Cl.: H01F 27/12, H01B 3/48

(54) **ALTERUNGSREDUKTION BEIM ISOLIERMATERIAL EINER WICKLUNG, INSBESONDERE EINES ÖLIMPRÄGNIERTEN HOCHSPANNUNGSGERÄTES**
REDUCING AGEING OF AN INSULATION MATERIAL OF A WINDING, IN PARTICULAR OF AN OIL-IMPREGNATED HIGH-VOLTAGE DEVICE
RÉDUCTION DU VIEILLISSEMENT DU MATÉRIAU D'ISOLATION D'UN ENROULEMENT, EN PARTICULIER D'UN APPAREIL À HAUTE TENSION IMPRÉGNÉ D'HUILE

(30) Priorität: 12.12.2018 AT 511002018
(43) Veröffentlichungstag der Anmeldung: 08.09.2021
(73) Patentinhaber: Siemens Energy Global GmbH & Co. KG, 81739 München (DE)
(72) Erfinder: SCALA, Mario, 8010 Graz (AT)
(86) Internationale Anmeldenummer: PCT/EP2019/082891
(87) Internationale Veröffentlichungsnummer: WO 2020/120149

(56) Entgegenhaltungen:
- EP-A1- 2 987 171
- WO-A1-2007/007143
- US-A- 3 102 159
- US-A- 4 450 424

## Beschreibung

### GEBIET DER ERFINDUNG

Die Erfindung betrifft eine Anordnung umfassend zumindest eine Wicklung und ein Gehäuse, in welcher die Wicklung angeordnet ist, wobei die Wicklung zumindest einen elektrischen Leiter aufweist, wobei die Wicklung und/oder deren elektrischer Leiter zumindest teilweise von einem zellulosehaltigen Isoliermaterial umgeben sind und wobei das Gehäuse im Betriebszustand mit einem flüssigen Kühlmittel gefüllt ist, sodass sich die Wicklung im Betriebszustand in einem flüssigen Kühlmittel befindet, wobei zusätzlich zum vorhandenen zellulosehaltigen Isoliermaterial, das die Wicklung und/oder deren elektrischen Leiter zu Isolationszwecken umgibt - im Gehäuse und/oder in einem Kühlkreislauf für das Kühlmittel zumindest ein Mittel enthalten ist, das chemische Verbindungen zum Reduzieren des Alterns von zellulosehaltigem Isoliermaterial enthält.

Die Anordnung kann ein flüssigkeitsgekühlter Transformator sein, vorzugsweise ein Leistungstransformator, oder eine andere flüssigkeitsgekühlte elektrische Anordnung, wie eine Drossel. Die Wicklung, z.B. in Form einer Spule, umfasst zumindest einen elektrischen Leiter, kann aber auch mehrere elektrische Leiter umfassen. Das zellulosehaltige Isoliermaterial, das einen elektrischen Leiter zumindest teilweise umgibt, kann etwa Papier sein, mit welchem ein elektrischer Leiter umwickelt ist. Das zellulosehaltige Isoliermaterial, das die Wicklung zumindest teilweise umgibt, besteht typischerweise aus Pressspan, der insbesondere bei dicken Teilen aus verklebten Pressspanschichten aufgebaut wird (sogenanntes "laminated pressboard"). Der Pressspan baut das Isolationssystem auf und hält die Wicklungen in gepresstem Zustand. Eine typische Eigenschaft ist die Imprägnierfähigkeit, die sich nicht nur auf Isolierflüssigkeit bezieht, sondern auch auf andere Komponenten, wie z.B. Alterungsprodukte, die über das Kühlmittel übertragen werden.

Die Anordnung ist vorzugsweise ein ölimprägniertes Hochspannungsgerät.

Die Erfindung betrifft auch ein Verfahren zur Reduzierung des Alterns von zellulosehaltigem Isoliermaterial einer Wicklung, wobei die Wicklung zumindest einen elektrischen Leiter aufweist, wobei die Wicklung und/oder deren elektrischer Leiter zumindest teilweise von einem zellulosehaltigen Isoliermaterial umgeben sind und wobei sich die Wicklung im Betriebszustand in einem flüssigen Kühlmittel befindet, wobei zusätzlich zum vorhandenen zellulosehaltigen Isoliermaterial, das die Wicklung und/oder deren elektrischen Leiter zu Isolationszwecken umgibt - in das flüssige Kühlmittel und/oder auf vorhandenes zellulosehaltiges Isoliermaterial zumindest ein Mittel zugegeben wird, das chemische Verbindungen zum Reduzieren des Alterns von zellulosehaltigem Isoliermaterial enthält.

Die Wicklung(en) und/oder (jeweils) deren elektrischer Leiter sind in der Regel von weiterem zellulosehaltigem Isoliermaterial umgeben, und die Wicklung(en) und diese Teile aus weiterem zellulosehaltigen Isoliermaterial befinden sich im Betrieb typischer Weise in einem flüssigen Kühlmittel.

### STAND DER TECHNIK

Eine Wicklung besteht aus in der Regel eng gewickelten elektrischen Leitern, wobei im Betriebszustand der Wicklung in den elektrischen Leitern dieser Wicklung Wärme entsteht. Um zu vermeiden, dass sich die Wärme innerhalb der Wicklung oder innerhalb des Gehäuses aufstaut, müssen die Wicklungen durch ein Kühlmittel, beispielsweise Öl, gekühlt werden. Das Kühlmittel dient auch der Isolation der Wicklungen und wird im Folgenden kurz als flüssiges Kühlmittel bezeichnet.

Die Alterung von Transformatoren oder Drosseln hängt neben der Temperatur stark von den Materialeigenschaften der verwendeten Materialien ab. Um die Alterungseigenschaften der unmittelbaren Leiterisolation zu verbessern, die meist in Form von Papier ausgeführt ist, wird das Papier vor der Umwicklung der Leiter chemischen Prozessen unterzogen, welche Prozesse als Thermostabilisierung (engl. "thermal upgrading") bezeichnet werden. Man spricht beim resultierenden Papier auch von "thermally upgraded (TU) papers". Diese thermostabilisierten Papiere sind bekannt und kommerziell erhältlich. Es gibt verschiedene Verfahren zu deren Herstellung, wie z.B. das Insuldur^{®}-Verfahren.

Es ist jedoch nicht üblich, Isolierteile aus reiner Zellulose, insbesondere Pressspan, in thermostabilisierter Qualität herzustellen. Pressspan, der in verschiedenen Formen, wie Platten oder an die Wicklung angepassten Formteilen, in Transformatoren und Drosseln eingesetzt wird, unterliegt daher im Betrieb ungeschützt der Alterung. Auch das thermostabilisierte Papier unterliegt im Betrieb der Alterung, welche aber bei derselben Temperatur langsamer voranschreitet als bei nicht thermostabilisiertem Papier.

Aus der EP 2 987 171 A1 ist ein Transformator bekannt, der über eine in einem Gehäuse angeordnetes Wicklungsanordnung verfügt, wobei die Wicklungsanordnung aus einer äußeren Primärwicklung und einer konzentrisch dazu angeordneten Sekundärwicklung besteht. Die Wicklungsanordnung umschließt den Schenkel eines geschlossenen Kerns. Der Kern und die Wicklungsanordnung sind in einem Kessel angeordnet, der mit einer Isolierflüssigkeit befüllt ist. Um die Alterung der Isolierung der Wicklungsleiter zu verhindern ist ein Wasser absorbierendes Element im Kessel vorgesehen.

Die WO 2007/007143 A1 beschreibt ein Verfahren zur Verzögerung des Alterns einer Zelluloseisolation.

Weiterer Stand der Technik ist in der US 3 102 159 A und der US 4 450 424 A beschrieben.

### DARSTELLUNG DER ERFINDUNG

Es ist somit eine Aufgabe der Erfindung, eine Anordnung und ein Verfahren zur Verfügung zu stellen, welche die Alterung von zellulosehaltigem Isoliermaterial reduzieren, das die bereits installierte Wicklung und/oder deren elektrischen Leiter zumindest teilweise umgibt.

Diese Aufgabe wird durch eine Anordnung gemäß Anspruch 1 und ein Verfahren gemäß Anspruch 9 gelöst.

Die thermische Alterung von Isoliermaterial führt im Betrieb zu einer Abnahme der mechanischen und der elektrischen Festigkeit.

Die mechanischen Eigenschaften sind für die Kurzschlussfestigkeit von großer Bedeutung. Zwar wird dabei gerne der Fokus auf das Wicklungspapier gelegt, das direkt vom Leiter beheizt wird. Doch liegt auch das Wicklungspapier stellenweise oft an Distanzteilen an, welche ebenfalls zellulosehaltig sind und in der Regel im Wesentlichen aus Pressspan bestehen, jedoch mangels direktem Kontakt zum Leiter einer geringeren Temperatur als das Wicklungspapier ausgesetzt sind. Weiters enthält die Presskonstruktion meist auch ausserhalb der Wicklung Pressspan, dessen Eigenschaft zur Aufrechterhaltung des Pressdrucks in der Wicklung wesentlich ist, weshalb auch diese Teile aus Pressspan, insbesondere Pressplatten, welche einen wesentlichen Anteil an der Presskonstruktion aufweisen, stabil bleiben sollten. Thermostabilisierter Pressspan ist aber nicht kommerziell verfügbar.

Die elektrische Festigkeit von Zellulose an sich nimmt durch Alterung nicht ab, aber es tragen Alterungsprodukte wie Feuchtigkeit, Säuren und gelöste Gase im festen (Isoliermaterial) und flüssigen (Kühlmittel) Isoliersystem zu einer Verschlechterung der elektrischen Eigenschaften bei.

Die Erfinder haben beobachtet, dass im Betrieb eines flüssigkeitsgekühlten Transformators oder einer flüssigkeitsgekühlten Drossel chemische Verbindungen zum Reduzieren des Alterns aus zellulosehaltigem Isoliermaterial, nämlich aus thermostabilisiertem Papier, in andere, nicht thermostabilisierte zellulosehaltige Isolierteile diffundieren. Der Effekt der Thermostabilisierung diffundiert sozusagen von anfangs (vor Inbetriebnahme des Transformators bzw. der Drossel) thermostabilisiertem Isolatiermaterial zu anfangs nicht thermostabilisiertem Isoliermaterial. Dieser Ausgleich findet sogar statt, wenn die Isolierteile durch das flüssige Kühlmittel getrennt sind. Dieser Effekt wird nun erfindungsgemäß absichtlich hervorgerufen, indem dem Transformator bzw. der Drossel zusätzlich Mittel zugegeben werden, welche chemische Verbindungen zum Reduzieren des Alterns von zellulosehaltigem Isoliermaterial enthalten, damit diese chemischen Verbindungen in jenes zellulosehaltige Isoliermaterial diffundieren, wo weniger oder gar keine thermostabilisierenden Komponenten enthalten sind. Das zusätzliche Mittel dient dabei aber selbst nicht der elektrischen Isolierung, sondern gibt nur die alterungsreduzierenden chemischen Verbindungen an die Umgebung ab, nämlich insbesondere an das zellulosehaltige Isoliermaterial, das zwecks Isolierung mit dem elektrischen Leiter bzw. der Wicklung in Kontakt steht.

Mit der Erfindung gelingt es nun, die bestehende zellulosehaltige Isolation in Richtung der Qualität von thermostabilisiertem Papier zu verbessern und damit die Alterung der Isolation zu verlangsamen.

Auch wenn bereits thermostabilisiertes Papier in der Isolation der Wicklung bzw. des elektrischen Leiters der Wicklung eingesetzt wird, verringert sich dessen Qualität mit der Zeit und es wird durch die Erfindung auch die Qualität dieses Papiers wieder erhöht, weil der Anteil an chemischen Verbindungen zum Reduzieren des Alterns in diesem Papier wieder erhöht wird.

Die erfindungsgemäße Lösung erlaubt es auch, die verwendete Sorte von Kühlmittel beizubehalten, selbst wenn es alternative flüssige Kühlmittel gäbe, die sich günstiger auf die Alterung der Isolierung auswirken würde als das verwendete flüssige Kühlmittel. Als Kühlmittel werden in der Regel ein Mineralöl oder ein Ester verwendet. Kühlmittel zur Kühlung von Transformatoren müssen gute elektrische Isoliereigenschaften aufweisen. Üblicherweise werden dafür Mineralöle oder Ester verwendet, wobei nur jene Ester in Betracht kommen, die im Betriebszustand in flüssiger Form vorliegen. Solche Ester werden auch als Esterfluid bezeichnet.

Bei der erfindungsgemäßen Anordnung ist vorgesehen, dass das Mittel (das chemische Verbindungen zum Reduzieren des Alterns von zellulosehaltigem Isoliermaterial enthält) ein zusätzliches zellulosehaltiges Isoliermaterial umfasst, das mit chemischen Verbindungen zum Reduzieren des Alterns von zellulosehaltigem Isoliermaterial versehen ist. Es wird also ein fester Träger, in Form von Isoliermaterial, in das Gehäuse eingebracht, welcher Träger über die Zeit die chemischen Verbindungen zum Reduzieren des Alterns freisetzt, sodass diese in die bestehenden zellulosehaltigen Isolierungen eindringen und deren Alterung reduzieren können. Dieser feste Träger wird dabei in der Regel so angeordnet, dass er das bestehende Isoliermaterial des Leiters (Papier) bzw. der Wicklung (Pressspanteile, z.B. Pressplatten) nicht berührt, weil die Übertragung der chemischen Verbindungen über das Kühlmittel erfolgt.

Bevorzugt, weil einfach verfügbar, ist dieses Mittel ein thermostabilisiertes Papier.

Es wäre auch denkbar, dass dieses Mittel eine Zugabevorrichtung ist, mittels welcher die chemischen Verbindungen zum Reduzieren des Alterns von zellulosehaltigem Isoliermaterial direkt dem Kühlmittel zugegeben werden können.

Bei einer bevorzugten Ausführungsform der erfindungsgemäßen Anordnung ist vorgesehen, dass das Mittel, etwa thermostabilisiertes Papier, an einer Stelle im Gehäuse angebracht ist, wo sich im Betriebszustand ein Heißbereich des Kühlmittels befindet, z.B. im Bereich eines Deckels des Gehäuses angeordnet ist. Ein Heißbereich befindet sich in der Regel über der bzw. den Wicklungen und damit in der Regel oben im Gehäuse unterhalb eines Deckels des Gehäuses. Wegen der hohen elektrischen Felder nahe der Wicklung ist praktisch meist nur der Deckelbereich verwendbar (der von der Wicklung beabstandet ist), und/oder der Bereich um die Zuleitung für das ungekühlte Kühlmittel aus dem Deckelbereich zum außerhalb des Gehäuses befindlichen Kühlelements. Umso höher die Temperatur des Kühlmittels ist, welches das Mittel umgibt, desto rascher werden die chemische Verbindungen aus dem Mittel gelöst und desto schneller können diese chemischen Verbindungen in die bestehenden zellulosehaltigen Isolierungen eindiffundieren.

Alternativ oder zusätzlich zum Anordnen des Mittels im Gehäuse kann auch vorgesehen sein, dass das Mittel in einer Rohrleitung des Kühlkreislaufs angeordnet ist, welche Rohrleitung das Gehäuse mit einem außerhalb des Gehäuses angeordneten Kühlelement, wie einem Radiator, verbindet, um dem Kühlelement erwärmtes Kühlmittel zuzuführen. Das Mittel wird also in der Zuleitung für das ungekühlte Kühlmittel aus dem Deckelbereich zum außerhalb des Gehäuses befindlichen Kühlelement angeordnet. Auch dort hat das Kühlmittel eine entsprechend hohe Temperatur, um die chemischen Verbindungen aus dem Mittel zu lösen. Vorzugsweise wird das Mittel in der Rohrleitung in einem Bereich befestigt, der nahe dem Gehäuse liegt.

Damit das Mittel möglichst einfach und dauerhaft im Inneren des Gehäuses oder auch im Inneren einer Rohrleitung platziert werden kann, besteht eine Ausführungsform der Erfindung darin, dass das Mittel, etwa thermostabilisiertes Papier, in einer Halterung gehalten und die Halterung im Inneren des Gehäuses und/oder des Kühlkreislaufs lösbar befestigt ist. Es können somit schon vor der Montage des Mittels im Gehäuse bzw. im Kühlkreislauf entsprechende Einheiten, etwa in Form von einsetzbaren Patronen, gefertigt werden, wobei diese Einheiten eine Halterung für das Mittel bilden, und diese Einheiten dann - an entsprechenden Gegenstücken - an einer Stelle im Gehäuse, insbesondere im Deckelbereich, bzw. im Kühlkreislauf befestigt werden. Die Halterung sollte an einer Stelle befestigt werden, die eine hohe Kühlmitteltemperatur aufweist und günstigenfalls von außen zugänglich ist, um eine Erneuerung des Materials mit den thermostabilisierenden Eigenschaften zu ermöglichen. Im Deckelbereich bietet sich vor allem der Bereich um die Zuleitung für das ungekühlte Kühlmittel aus dem Deckelbereich zum außerhalb des Gehäuses befindlichen Kühlelements an, da dort die Kühlmittelströmung (in der Regel die Ölströmung) für eine gute Weiterleitung der Substanzen sorgt. Im Kühlkreislauf bietet sich die Zuleitung für das ungekühlte Kühlmittel aus dem Deckelbereich zum außerhalb des Gehäuses befindlichen Kühlelements an. Die Halterung kann in jedem Fall die Form eines Käfigs haben, in welchem z.B. thermostabilisiertes Papier enthalten ist.

Durch die lösbare Befestigung kann die Halterung einfach ausgetauscht werden, wenn die chemische Verbindungen zum Reduzieren des Alterns darin aufgebraucht sind, und durch eine neue Halterung mit einem frischem Mittel enthaltend chemische Verbindungen zum Reduzieren des Alterns ersetzt werden. Die Halterung könnte z.B. das Mittel, etwa thermostabilisiertes Papier, so halten, dass es durch eine Strömung des Kühlmittels beweglich bleibt, ähnlich einem Teebeutel im Wasser.

Alternativ oder zusätzlich zum Anordnen des Mittels frei, insbesondere lösbar, im Gehäuse und/oder in einer Rohrleitung des Kühlkreislaufs kann auch vorgesehen sein, dass das Mittel auf zumindest einem Teil aus zellulosehaltigem Isoliermaterial, das die Wicklung und/oder deren elektrischen Leiter zu Isolationszwecken umgibt, angebracht ist, insbesondere zwischen zwei Teilen aus zellulosehaltigem Isoliermaterial. In diesem Fall wird das Mittel bereits bei der Herstellung der Anordnung in die Anordnung eingebracht und kann von dort in der Regel nicht mehr entfernt werden, sobald die Anordnung einmal zusammengebaut ist bzw. in Betrieb genommen worden ist. Die Teile aus zellulosehaltigem Isoliermaterial sind vorzugsweise Teile aus Pressspan, zwischen denen das Mittel eingebracht wird.

Das Mittel kann entweder wieder ein zusätzliches zellulosehaltiges Isoliermaterial umfassen, z.B. thermostabilisiertes Papier. Dieses könnte zwischen zwei Teile aus Pressspan geklemmt werden. Das Mittel kann aber auch direkt als chemische Verbindung zum Reduzieren des Alterns auf eine Grenzfläche oder Oberfläche eines Teils aus zellulosehaltigem Isoliermaterial aufgetragen werden, z.B. durch Anstreichen oder Ansprühen. Vorzugsweise grenzt an diese Fläche ein zweiter Teil aus zellulosehaltigem Isoliermaterial an. Die chemische Verbindung wird bei der Herstellung der Anordnung z.B. vor dem Trockenprozess eingebracht und kann während des Trocknens bei entsprechender Temperatur in das Isoliermaterial diffundieren und teilweise über das Vakuum jedoch auch abgesaugt werden. Beim Herstellprozess eines Transformators etwa wird nämlich der Aktivteil (Wicklungen, Isolierungen), ohne Kessel, in einer großen Trocknungsanlage (Ofen) getrocknet. Beim Aufheizprozess wird meist Kerosin als Wärmeträger genutzt, anschließend mit Vakuum sowohl die Restfeuchte als auch der Wärmetrager wieder entfernt.

Eine Ausführungsform der Erfindung sieht vor, dass die chemischen Verbindungen zum Reduzieren des Alterns von zellulosehaltigem Isoliermaterial zumindest eine der folgenden Verbindungen enthalten: Dicyandiamid, Melamin, Polyacrylamid. Diese Verbindungen sind aus der Herstellung von thermostabilisiertem Papier bekannt, siehe z.B. das Insuldur^{®}-Verfahren.

Die Erfindung betrifft auch ein Verfahren zur Reduzierung des Alterns von zellulosehaltigem Isoliermaterial einer Wicklung gemäß Anspruch 9.

Grundsätzlich kann das Mittel in fester und/oder flüssiger Form zugegeben werden. Wenn das Mittel in flüssiger Form zugegeben wird, etwa als Lösung, ist zu berücksichtigen, dass die im Mittel enthaltenen chemischen Verbindungen eine entsprechend gute Löslichkeit im Kühlmittel besitzen.

Mit der Zugabe des Mittels in fester Form ist gemeint, dass die chemischen Verbindungen zum Reduzieren des Alterns entweder selbst in fester Form zugegeben werden, oder an ein Mittel in Form eines Festkörpers gebunden sind. Erfindungsgemäß umfasst das Mittel ein zusätzliches zellulosehaltiges Isoliermaterial, das mit chemischen Verbindungen zum Reduzieren des Alterns von zellulosehaltigem Isoliermaterial versehen ist. Dieses Mittel kann etwa thermostabilisiertes Papier sein.

Der Zeitpunkt der Zugabe des Mittels, das chemische Verbindungen zum Reduzieren des Alterns enthält, sowie der zugegebenen Menge kann in Abhängigkeit vom Verbrauch dieser chemischen Verbindungen im bestehenden Isoliermaterial erfolgen. Durch Beigabe von Papier und Pressspanproben - ohne Thermostabilisierung - kann durch Entnahme dieser Proben der Gehalt der Thermostabilisierungskomponenten überprüft werden. Aus Sicht einer einfacheren Probenentnahme kann bei einer ausreichenden Empfindlichkeit der Kühlmittel-Analytik (Öl-Analytik) der Gehalt der chemischen Verbindungen zum Reduzieren des Alterns im flüssigen Kühlmittel kontrolliert werden, wobei durch eine eventuelle Bestimmung der Temperaturabhängigkeit des Löslichkeitsgleichgewichts zwischen Zellulose und Kühlmittel die im Kühlmittel gemessenen Komponente verbessert beurteilt werden kann.

Wie schon im Zusammenhang mit der erfindungsgemäßen Anordnung erläutert wurde, kann das Mittel an einer Stelle zugegeben werden, wo sich im Betriebszustand ein Heißbereich des Kühlmittels befindet. Ebenso können für das erfindungsgemäße Verfahren jene chemischen Verbindungen zum Reduzieren des Alterns von zellulosehaltigem Isoliermaterial verwendet werden, die bereits im Zusammenhang mit der erfindungsgemäßen Anordnung genannt worden sind.

Eine alternative oder zusätzliche Möglichkeit zum Zugeben eines Mittels während des Betriebs der Wicklung besteht darin, dass das Mittel während der Produktion der Wicklung, also vor dem Betrieb der Wicklung, auf vorhandenes zellulosehaltiges Isoliermaterial zugegeben wird. Dazu gibt es grundsätzlich drei einander nicht ausschließende Möglichkeiten:
Das Mittel kann vor einem etwaigen Trockenprozess der Wicklung auf zumindest einem Teil aus zellulosehaltigem Isoliermaterial, das die Wicklung und/oder deren elektrischen Leiter zu Isolationszwecken umgibt, aufgebracht werden, insbesondere zwischen zwei Teilen aus zellulosehaltigem Isoliermaterial.

Dabei kann etwa die chemische Verbindung selbst auf zumindest einem Teil aus zellulosehaltigem Isoliermaterial aufgebracht werden. Die chemische Verbindung kann dann durch die Wärme beim Trocknen in das Isoliermaterial eindringen.

Oder das Mittel kann im Zuge eines Trockenprozesses der Wicklung dem Wärmeträger für das Trocknen beigegeben werden. Die Wicklung wird beim Trocknen in einer geschlossenen Trocknungsanlage (Ofen) mit einem Wärmeträger aufgeheizt, meist mit Kerosin. Anschließend werden Restfeuchte und Wärmeträger mittels Vakuum wieder aus der Trocknungsanlage entfernt. Man könnte also die chemischen Verbindungen zum Reduzieren des Alterns dem Wärmeträger in gelöster Form beigeben. Die chemischen Verbindungen werden von vorhandenem zellulosehaltigem Isoliermaterial aufgenommen und können während des Trocknens und später im Betrieb der Wicklung tiefer in das Isoliermaterial eindringen bzw. sich dort verteilen.

Oder das Mittel wird der Luft beigegeben, die nach einem Trockenprozess der Wicklung in die Trockungsanlage geleitet wird. Nach dem Trocknen werden sowohl die Restfeuchte als auch der Wärmeträger mit Vakuum entfernt, anschließend kann wieder Luft in die Trocknungsanlage einströmen. Dieser Luft werden die chemischen Verbindungen zum Reduzieren des Alterns beigegeben, diese können sich auf vorhandenem zellulosehaltigen Isoliermaterial ablagern und in das noch vom Trocknen heiße Isoliermaterial eindringen oder später im Betrieb der Wicklung von der Oberfläche des Isoliermaterials in dieses diffundieren, oder im Betrieb über das Kühlmittel zu anderen Teilen aus Isoliermaterial transportiert werden und in diese eindringen.

Mit der Erfindung kann der Abbau eventuell vorhandener thermostabilisierender Komponenten im Isolationspapier reduziert und/oder können die thermostabilisierenden Komponenten an anderer Stelle dem flüssigen Kühlmittel zugefügt werden, was eine Anwendung für sowohl neue als auch bereits bestehende Transformatoren oder Drosseln ermöglicht.

### KURZE BESCHREIBUNG DER FIGUREN

Zur weiteren Erläuterung der Erfindung wird im nachfolgenden Teil der Beschreibung auf die Figuren Bezug genommen, aus denen weitere vorteilhafte Einzelheiten und mögliche Einsatzgebiete der Erfindung zu entnehmen sind. Die Figuren sind als beispielhaft zu verstehen und sollen den Erfindungscharakter zwar darlegen, ihn aber keinesfalls einengen oder gar abschließend wiedergeben. Es zeigt:
- Fig. 1: eine schematische Darstellung eines Transformators,
- Fig. 2: Versuchsergebnisse für die Alterung von zellulosehaltigem Isoliermaterial.

### WEGE ZUR AUSFÜHRUNG DER ERFINDUNG

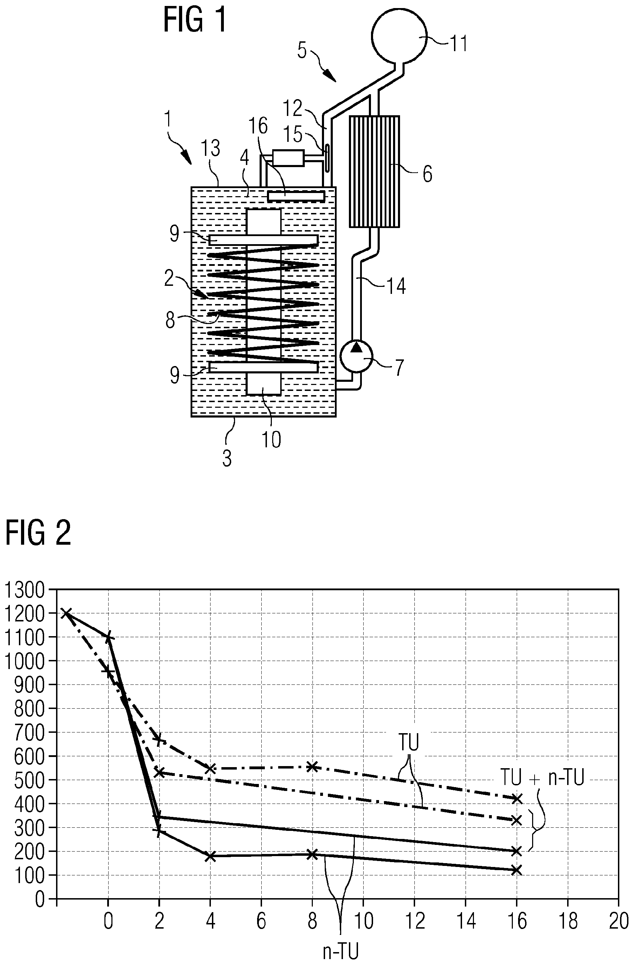

Fig. 1 zeigt eine schematische Darstellung eines Transformators 1. Der erfindungsgemäße Transformator 1 verfügt über mehrere Transformatorwicklungen, von denen hier nur eine Transformatorwicklung 2 dargestellt ist, die um einen Kern 10 gewickelt ist. Diese Anordnung entspricht dem sogenannten "core-type-design". Es gibt auch ein "shell-type-design", das ein sehr ähnliches Verhaltensmuster aufweist, und auf welches die Erfindung ebenfalls angewendet werden kann. Darüber hinaus verfügt der Transformator 1 über ein Gehäuse 3, das mit einem flüssigen Kühlmittel 4 befüllt ist. Den oberen Teil des Gehäuses 3 bildet ein Deckelbereich, im Folgenden kurz Deckel 13 genannt. Im Deckel 13 werden meist Flansche angebracht, um z.B. für Service-Aktivitäten lokal Zugriff auf das Innere des Gehäuses zu haben.

Zur Aufnahme des Kühlmittels 4 bei hohen Temperaturen ist hier ein Ausdehnungsgefäß 11 vorgesehen, das über eine Rohrleitung 12 mit dem Gehäuse 3 verbunden ist. Zwischen dem Ausdehnungsgefäß 11 und Gehäuse 3 ist ein Kühlkreislauf 5 angeordnet. Dieser umfasst neben dem Ausdehnungsgefäß 11 Rohrleitungen 12, 14, eines oder mehrere Kühlelemente 6 (hier Radiatoren) und, nicht zwingend, eine Pumpe 7. Die Rohrleitung 12, die vom Deckel 13 des Gehäuses 3 zu einem Kühlelement 6 führt, bringt das heiße Kühlmittel 4 in das Kühlelement 6. Aus dem Kühlelement 6 wird das abgekühlte Kühlmittel 4, gegebenenfalls über eine Pumpe 7, wieder zurück in das Gehäuse 3 gefördert, in der Regel in der Nähe des Bodens.

Der Leiter 8 der Transformatorwickung 2 ist mit, z.B. thermostabilisiertem, Papier umwickelt. Zwischen den Spulen jeder Wicklung 2 sind oft Distanzhalter aus Pressspan enthalten, auch gibt es Zylinder und andere Teile aus Pressspan, welche in, um und zwischen den Wicklungen 2 bzw. dem Kern 10 usw. zur elektrischen Isolation dienen und den Zugang des Kühlmittels 4 zu Spannung führenden Teilen ermöglichen. Die zugehörige Pressvorrichtung, welche die Transformatorwickung 2 in Höhenrichtung zusammenpresst, ist in Fig. 1 nicht dargestellt, es sind lediglich zellulosehaltige Pressplatten 9 dargestellt. Zusätzlich zum eventuell bereits thermostabilisierten Papier, mit dem der Leiter 8 umwickelt ist, wird nun ein zusätzliches Mittel 16, das chemische Verbindungen zum Reduzieren des Alterns von zellulosehaltigem Isoliermaterial enthält, z.B. thermostabilisiertes Papier, im Gehäuse 3 angeordnet, und zwar im Bereich des Deckels 13, z.B. an dessen Unterseite, sodass das Mittel 16 einfach von oben, etwa durch Öffnen einer Vorrichtung im Deckel 13, eingebracht und wieder entfernt werden kann. Das Mittel 16 wird am besten in der Nähe der Rohrleitung 12 am Deckel 13 angebracht, weil dort eine entsprechende Strömungsgeschwindigkeit des Kühlmittels 4 vorliegt. Bei Öffnen der Vorrichtung im Deckel 13 ist auf das Schließen der Rohrleitung 12 zum Ausdehnungsgefäß 11 zu achten, um ein Ausströmen des Kühlmittels durch die Vorrichtung im Deckel 13 hindurch zu verhindern. Das Mittel 15 könnte aber - alternativ oder zusätzlich - direkt in die Rohrleitung 12, die zum Radiator 6 führt, angebracht sein. Die thermostabilisierenden Substanzen, die in dem Mittel 15, 16 enthalten sind, werden in das flüssige Kühlmittel eingebracht und finden durch die Umwälzung des Kühlmittels den Weg zu allen flüssigkeitsbenetzten Teilen, also auch allen Isolierteilen aus Zellulose.

Die chemischen Verbindungen zum Reduzieren des Alterns von zellulosehaltigem Isoliermaterial können dann sowohl in das thermostabilisierte Papier, mit dem der Leiter 8 umwickelt ist, als auch in die Pressplatten 9 und alle anderen zellulosehaltigen Teile eindiffundieren. Dadurch werden einerseits die Verbindungen, die im thermostabilisierten Papier des Leiters 8 schon abgebaut worden sind, wieder ersetzt. Andererseits lagern sich diese Verbindungen erstmals in den Pressspan der Pressplatten 9 ein und verringern so die Alterung des Pressspans.

In Fig. 2 sind die Ergebnisse von Alterungsversuchen mit unterschiedlichen Isoliermaterialien dargestellt. Auf der waagrechten Achse ist die Zeit in Wochen angegeben, auf der senkrechten Achse der Polymerisationsgrad der Zellulose der jeweiligen Materialien. Der Polymerisationsgrad der Zellulose ist ein Maß für die Faserfestigkeit und damit für die Zugfestigkeit des Materials. Der Polymerisationsgrad kann gemessen werden.

Die oberste Kurve zeigt den zeitlichen Verlauf des Polymerisationsgrads eines thermostabilisierten Papiers (TU), das allein in ein Ölbad mit 140°C eingelegt ist, wobei das Öl dem Kühlmittel eines Transformators entspricht. Die unterste Kurve zeigt den zeitlichen Verlauf des Polymerisationsgrads eines nicht thermostabilisierten Papiers (n-TU), das allein in ein Ölbad mit 140°C eingelegt ist. Man sieht, dass das nicht behandelte Papier auf längere Zeit deutlich schneller altert als das behandelte, also thermostabilisierte Papier.

Legt man nun sowohl thermostabilisiertes Papier als auch nicht thermostabilisiertes Papier gemeinsam in das Ölbad mit 140°C (TU + n-TU), so zeigt das thermostabilisierte Papier gemäß der - bei Woche 16 betrachteten - zweiten Kurve von oben einen Polymerisationsgrad, der gegenüber dem allein eingelegten thermostabilisierten Papier (oberste Kurve) reduziert ist. Für das nicht thermostabilisierte Papier ergibt sich hingegen gemäß der - bei Woche 16 betrachteten - zweiten Kurve von unten ein Polymerisationsgrad, der gegenüber dem allein eingelegten nicht thermostabilisierten Papier (unterste Kurve) erhöht ist. Das thermostabilisierte Papier verliert also beim gemeinsamen Einlegen die chemischen Verbindungen, welche die Alterung vermindern, während sich diese Verbindungen in dem zuvor nicht thermostabilisiertem Papier anlagern. Der Ausgleich erfolgt somit durch die Übertragung des Kühlmittels, also meist des Isolieröls, da die festen Teile nur eingeschränkt oder überhaupt nicht in unmittelbaren Kontakt zueinander stehen.

### Bezugszeichenliste:

- 1: Transformator
- 2: (Transformator)Wicklung
- 3: Gehäuse
- 4: flüssiges Kühlmittel
- 5: Kühlkreislauf
- 6: Kühlelement (Radiator)
- 7: Pumpe
- 8: Leiter der Transformatorwicklung
- 9: Pressplatte
- 10: Kern
- 11: Ausdehnungsgefäß
- 12: Rohrleitung
- 13: Deckel des Gehäuses 3
- 14: Rückleitungsrohr
- 15: Mittel, das chemische Verbindungen zum Reduzieren des Alterns von zellulosehaltigem Isoliermaterial enthält (thermostabilisiertes Papier)
- 16: Mittel, das chemische Verbindungen zum Reduzieren des Alterns von zellulosehaltigem Isoliermaterial enthält (thermostabilisiertes Papier)

## Patentansprüche

1. Anordnung umfassend zumindest eine Wicklung (2) und ein Gehäuse (3), in welcher die Wicklung angeordnet ist, wobei die Wicklung zumindest einen elektrischen Leiter (8) aufweist, wobei die Wicklung und/oder deren elektrischer Leiter zumindest teilweise von einem zellulosehaltigen Isoliermaterial umgeben sind und wobei das Gehäuse (3) im Betriebszustand mit einem flüssigen Kühlmittel (4) gefüllt ist, sodass sich die Wicklung (2) im Betriebszustand in einem flüssigen Kühlmittel (4) befindet, -wobei zusätzlich zum vorhandenen zellulosehaltigen Isoliermaterial, das die Wicklung (2) und/oder deren elektrischen Leiter (8) zu Isolationszwecken umgibt - im Gehäuse (3) und/oder in einem Kühlkreislauf (5) für das Kühlmittel (4) zumindest ein Mittel (15, 16) enthalten ist, das chemische Verbindungen zum Reduzieren des Alterns von zellulosehaltigem Isoliermaterial enthält, **dadurch gekennzeichnet, dass** das Mittel (15, 16) ein zusätzliches zellulosehaltiges Isoliermaterial umfasst, das mit chemischen Verbindungen zum Reduzieren des Alterns von zellulosehaltigem Isoliermaterial versehen ist.

2. Anordnung nach Anspruch 1, **dadurch gekennzeichnet, dass** das Mittel (15, 16) ein thermostabilisiertes Papier ist.

3. Anordnung nach einem der Ansprüche 1 oder 2, **dadurch gekennzeichnet, dass** das Mittel (16) an einer Stelle im Gehäuse (3) angebracht ist, wo sich im Betriebszustand ein Heißbereich des Kühlmittels (4) befindet.

4. Anordnung nach Anspruch 3, **dadurch gekennzeichnet, dass** das Mittel (15) im Bereich eines Deckels (13) des Gehäuses (3) angeordnet ist.

5. Anordnung nach einem der Ansprüche 1 bis 4, **dadurch gekennzeichnet, dass** das Mittel (15, 16) in einer Halterung gehalten und die Halterung im Inneren des Gehäuses (3) und/oder des Kühlkreislaufs (5) lösbar befestigt ist.

6. Anordnung nach einem der Ansprüche 1 bis 5, **dadurch gekennzeichnet, dass** das Mittel (15) in einer Rohrleitung (12) des Kühlkreislaufs (5) angeordnet ist, welche Rohrleitung das Gehäuse (3) mit einem außerhalb des Gehäuses angeordneten Kühlelement (6), wie einen Radiator, verbindet, um dem Kühlelement (6) erwärmtes Kühlmittel zuzuführen.

7. Anordnung nach einem der Ansprüche 1 bis 6, **dadurch gekennzeichnet, dass** das Mittel (15) im Gehäuse (3) auf zumindest einem Teil aus zellulosehaltigem Isoliermaterial, das die Wicklung (2) und/oder deren elektrischen Leiter (8) zu Isolationszwecken umgibt, angebracht ist, insbesondere zwischen zwei Teilen aus zellulosehaltigem Isoliermaterial.

8. Anordnung nach einem der Ansprüche 1 bis 7, **dadurch gekennzeichnet, dass** die chemischen Verbindungen zum Reduzieren des Alterns von zellulosehaltigem Isoliermaterial zumindest eine der folgenden Verbindungen enthalten: Dicyandiamid, Melamin, Polyacrylamid.

9. Verfahren zur Reduzierung des Alterns von zellulosehaltigem Isoliermaterial einer Wicklung (2), wobei die Wicklung zumindest einen elektrischen Leiter (8) aufweist, wobei die Wicklung und/oder deren elektrischer Leiter zumindest teilweise von einem zellulosehaltigen Isoliermaterial umgeben sind und wobei sich die Wicklung (2) im Betriebszustand in einem flüssigen Kühlmittel (4) befindet, wobei zusätzlich zum vorhandenen zellulosehaltigen Isoliermaterial, das die Wicklung (2) und/oder deren elektrischen Leiter (8) zu Isolationszwecken umgibt - in das flüssige Kühlmittel (4) und/oder auf vorhandenes zellulosehaltiges Isoliermaterial zumindest ein Mittel (15, 16) zugegeben wird, das chemische Verbindungen zum Reduzieren des Alterns von zellulosehaltigem Isoliermaterial enthält, **dadurch gekennzeichnet, dass** das Mittel (15, 16) ein zusätzliches zellulosehaltiges Isoliermaterial umfasst, das mit chemischen Verbindungen zum Reduzieren des Alterns von zellulosehaltigem Isoliermaterial versehen ist.

10. Verfahren nach Anspruch 9, **dadurch gekennzeichnet, dass** das Mittel (15, 16) ein thermostabilisiertes Papier ist.

11. Verfahren nach einem der Ansprüche 9 oder 10, **dadurch gekennzeichnet, dass** das Mittel (15, 16) an einer Stelle zugegeben wird, wo sich im Betriebszustand ein Heißbereich des Kühlmittels (4) befindet.

12. Verfahren nach einem der Ansprüche 9 bis 11, **dadurch gekennzeichnet, dass** das Mittel während der Produktion der Wicklung auf vorhandenes zellulosehaltiges Isoliermaterial zugegeben wird.

13. Verfahren nach Anspruch 12, **dadurch gekennzeichnet, dass** das Mittel vor einem etwaigen Trockenprozess der Wicklung auf zumindest einem Teil aus zellulosehaltigem Isoliermaterial, das die Wicklung (2) und/oder deren elektrischen Leiter (8) zu Isolationszwecken umgibt, aufgebracht wird, insbesondere zwischen zwei Teilen aus zellulosehaltigem Isoliermaterial.

14. Verfahren nach Anspruch 13, **dadurch gekennzeichnet, dass** das Mittel im Zuge eines Trockenprozesses der Wicklung dem Wärmeträger für das Trocknen beigegeben wird.

15. Verfahren nach Anspruch 13, **dadurch gekennzeichnet, dass** das Mittel der Luft beigegeben wird, die nach einem Trockenprozess der Wicklung in die Trockungsanlage geleitet wird.

16. Verfahren nach einem der Ansprüche 9 bis 15, **dadurch gekennzeichnet, dass** die chemischen Verbindungen zum Reduzieren des Alterns von zellulosehaltigem Isoliermaterial zumindest eine der folgenden Verbindungen enthalten: Dicyandiamid, Melamin, Polyacrylamid.

## Claims

1. Assembly comprising at least a winding (2) and a housing (3) within which the winding is disposed, wherein the winding includes at least one electrical conductor (8), wherein the winding and/or the electrical conductor thereof is at least partly surrounded by a cellulosic insulation material and wherein the housing (3) is filled with a liquid coolant (4) in the state of operation, such that the winding (2) is within a liquid coolant (4) in the state of operation, wherein - in addition to the cellulosic insulation material present that surrounds the winding (2) and/or the electrical conductor (8) thereof for insulation purposes - at least one composition (15, 16) containing chemical compounds for reducing the ageing of cellulosic insulation material is present in the housing (3) and/or in a cooling circuit (5) for the coolant (4), **characterized in that** the composition (15, 16) comprises an additional cellulosic insulation material provided with chemical compounds for reducing the ageing of cellulosic insulation material.

2. Assembly according to Claim 1, **characterized in that** the composition (15, 16) is a thermally upgraded paper.

3. Assembly according to either of Claims 1 and 2, **characterized in that** the composition (16) is mounted at a position within the housing (3) where there is a hot region of the coolant (4) in the state of operation.

4. Assembly according to Claim 3, **characterized in that** the composition (15) is disposed in the region of a lid (13) of the housing (3).

5. Assembly according to any of Claims 1 to 4, **characterized in that** the composition (15, 16) is held in a holder and the holder is releasably secured within the housing (3) and/or the cooling circuit (5).

6. Assembly according to any of Claims 1 to 5, **characterized in that** the composition (15) is disposed in a pipeline (12) of the cooling circuit (5), which pipeline connects the housing (3) to a cooling element (6) disposed outside the housing, such as a radiator, in order to supply the cooling element (6) with heated coolant.

7. Assembly according to any of Claims 1 to 6, **characterized in that** the composition (15) is mounted in the housing (3) on at least one part made of cellulosic insulation material that surrounds the winding (2) and/or the electrical conductor (8) thereof for insulation purposes, especially between two parts made of cellulosic insulation material.

8. Assembly according to any of Claims 1 to 7, **characterized in that** the chemical compounds for reducing the ageing of cellulosic insulation material include at least one of the following compounds: dicyandiamide, melamine, polyacrylamide.

9. Method of reducing the ageing of cellulosic insulation material of a winding (2), wherein the winding includes at least one electrical conductor (8), wherein the winding and/or the electrical conductor thereof is at least partly surrounded by a cellulosic insulation material and wherein the winding (2) is within a liquid coolant (4) in the state of operation, wherein - in addition to the cellulosic insulation material present that surrounds the winding (2) and/or the electrical conductor (8) thereof for insulation purposes - at least one composition (15, 16) containing chemical compounds for reducing the ageing of cellulosic insulation material is added to the liquid coolant (4) and/or to existing cellulosic insulation material, **characterized in that** the composition (15, 16) comprises an additional cellulosic insulation material provided with chemical compounds for reducing the ageing of cellulosic insulation material.

10. Method according to Claim 9, **characterized in that** the composition (15, 16) is a thermally upgraded paper.

11. Method according to either of Claims 9 and 10, **characterized in that** the composition (15, 16) is added at a position where there is a hot region of the coolant (4) in the state of operation.

12. Method according to any of Claims 9 to 11, **characterized in that** the composition is added to existing cellulosic insulation material during the production of the winding.

13. Method according to Claim 12, **characterized in that** the composition, prior to any process of drying the winding, is applied to at least one part made of cellulosic insulation material that surrounds the winding (2) and/or the electrical conductor (8) thereof for insulation purposes, especially between two parts made of cellulosic insulation material.

14. Method according to Claim 13, **characterized in that** the composition is added to the heat carrier for the drying in the course of a process of drying the winding.

15. Method according to Claim 13, **characterized in that** the composition is added to the air that is guided into the drying system after a process of drying the winding.

16. Method according to any of Claims 9 to 15, **characterized in that** the chemical compounds for reducing the ageing of cellulosic insulation material include at least one of the following compounds: dicyandiamide, melamine, polyacrylamide.

## Revendications

1. Dispositif comprenant au moins un enroulement (2) et un boîtier (3), dans lequel l'enroulement comporte au moins un conducteur (8) électrique, dans lequel l'enroulement et/ou ses conducteurs électriques sont entourés en moins en partie d'un matériau isolant contenant de la cellulose et dans lequel le boîtier (3) est, dans l'état de fonctionnement, rempli d'un fluide (4) liquide de refroidissement, de manière à ce que l'enroulement (2) se trouve, dans l'état de fonctionnement, dans un fluide (4) liquide de refroidissement, dans lequel, en plus du matériau isolant présent contenant de la cellulose, qui entoure l'enroulement (2) et/ou ses conducteurs (8) électriques à des fins d'isolation - il est contenu dans le boîtier (3) et/ou dans un circuit (5) de refroidissement pour le fluide (4) de refroidissement au moins un moyen (15, 16), qui contient des composés chimiques de réduction du vieillissement du matériau isolant contenant de la cellulose, **caractérisé en ce que** le moyen (15, 16) comprend un matériau isolant supplémentaire contenant de la cellulose, qui est pourvu de composés chimiques de réduction du vieillissement du matériau isolant contenant de la cellulose.

2. Dispositif suivant la revendication 1, **caractérisé en ce que** le moyen (15, 16) est du papier thermostabilisé.

3. Dispositif suivant l'une des revendications 1 à 2, **caractérisé en ce que** le moyen (16) est mis à un endroit dans le boîtier (3) où se trouve dans l'état de fonctionnement une partie chaude du fluide (4) de refroidissement.

4. Dispositif suivant la revendication 3, **caractérisé en ce que** le moyen (15) est disposé dans la partie d'un couvercle (13) du boîtier (3).

5. Dispositif suivant l'une des revendications 1 à 4, **caractérisé en ce que** le moyen (15, 16) est maintenu dans une fixation et la fixation est fixée de manière amovible à l'intérieur du boîtier (3) et/ou du circuit (5) de refroidissement.

6. Dispositif suivant l'une des revendications 1 à 5, **caractérisé en ce que** le moyen (15) est disposé dans un conduit (12) tubulaire du circuit (5) de refroidissement, lequel conduit tubulaire relie le boîtier (3) à un élément (6) de refroidissement disposé à l'extérieur du boîtier, comme un radiateur, afin d'envoyer du fluide de refroidissement chauffé à l'élément (6) de refroidissement.

7. Dispositif suivant l'une des revendications 1 à 6, **caractérisé en ce que** le moyen (15) est disposé dans le boîtier (3) sur au moins une partie composée de matériau isolant contenant de la cellulose, qui entoure l'enroulement (2) et/ou ses conducteurs (8) électriques à des fins d'isolation, en étant disposé notamment entre deux parties en matériau isolant contenant de la cellulose.

8. Dispositif suivant l'une des revendications 1 à 7, **caractérisé en ce que** les composés chimiques de réduction du vieillissement de matériau isolant contenant de la cellulose contiennent au moins l'un des composés suivants : dicyandiamide, mélamine, polyacrylamide.

9. Procédé de réduction du vieillissement de matériau isolant contenant de la cellulose d'un enroulement (2), dans lequel l'enroulement a au moins un conducteur (8) électrique, dans lequel l'enroulement et/ou ses conducteurs électriques sont entourés en moins en partie d'un matériau isolant contenant de la cellulose et dans lequel l'enroulement (2) se trouve, dans l'état de fonctionnement, dans un fluide (4) liquide de refroidissement, dans lequel, en plus du matériau isolant présent contenant de la cellulose, qui entoure l'enroulement (2) et/ou ses conducteurs (8) électriques à des fins d'isolation - il est ajouté sur le matériau isolant de la cellulose présent et/ou dans le fluide (4) liquide de refroidissement au moins un moyen (15, 16), qui contient des composés chimiques de réduction du vieillissement du matériau isolant contenant de la cellulose, **caractérisé en ce que** le moyen (15, 16) comprend un matériau isolant supplémentaire contenant de la cellulose, qui est pourvu de composés chimiques de réduction du vieillissement du matériau isolant contenant de la cellulose.

10. Procédé suivant la revendication 9, **caractérisé en ce que** le moyen (15, 16) est du papier thermostabilisé.

11. Procédé suivant l'une des revendications 9 ou 10, **caractérisé en ce que** le moyen (15, 16) est mis à un endroit dans le boîtier où se trouve dans l'état de fonctionnement une partie chaude du fluide (4) de refroidissement.

12. Procédé suivant l'une des revendications 9 ou 11, **caractérisé en ce que** l'on ajoute le moyen pendant la production de l'enroulement à du matériau isolant contenant de la cellulose présent.

13. Procédé suivant la revendication 12, **caractérisé en ce que** l'on dépose, notamment entre deux parties de matériau isolant contenant de la cellulose, le moyen, avant une opération éventuelle de séchage de l'enroulement, sur au moins une partie du matériau isolant contenant de la cellulose, qui entoure l'enroulement (2) et/ou ses conducteurs (8) électriques à des fins d'isolation, en particulier entre deux parties en matériau contenant de la cellulose.

14. Procédé suivant la revendication 13, **caractérisé en ce que** l'on ajoute, à l'agent caloporteur pour le séchage, le moyen au cours d'une opération de séchage de l'enroulement.

15. Procédé suivant la revendication 13, **caractérisé en ce que** l'on ajoute le moyen à de l'air, que l'on envoie dans l'installation de séchage après une opération de séchage de l'enroulement.

16. Procédé suivant l'une des revendications 9 à 15, **caractérisé en ce que** les composés chimiques de réduction du vieillissement de matériau isolant contenant de la cellulose contiennent au moins l'un des composés suivants : dicyandiamide, mélamine, polyacrylamide.
